# EUROPÄISCHE PATENTSCHRIFT

(11) **EP 3 283 269 B1**
(45) Veröffentlichungstag und Bekanntmachung des Hinweises auf die Patenterteilung: **14.11.2018**
(21) Anmeldenummer: 16722247.0
(22) Anmeldetag: 13.05.2016
(51) Int. Cl.: B29C 45/68

(54) **KNIEHEBEL-SCHLIESSEINHEIT FÜR EINE SPRITZGIESSMASCHINE**
TOGGLE CLAMPING UNIT FOR AN INJECTION MOULDING MACHINE
MÉCANISME À GENOUILLÈRE POUR UNE UNITÉ DE FERMETURE D'UNE MACHINE DE MOULAGE PAR INJECTION

(30) Priorität: 19.06.2015 DE 102015109840
(43) Veröffentlichungstag der Anmeldung: 21.02.2018
(73) Patentinhaber: Netstal-Maschinen AG, 8752 Näfels (CH)
(72) Erfinder: ANGST, Adrian, 8753 Mollis (CH); FUCHS, Martin, 8548 Ellikon an der Thur (CH); HAUSAMMANN, Manuel, 9500 Wil (CH); HAUTLE, Marcel, 8753 Mollis (CH); JENNY, Daniel, 8868 Oberurnen (CH); LÜTHI, Marc, 8854 Galgenen (CH); MÄCHLER, Adrian, 8835 Feusisberg (CH); MEIER, Marco, 8340 Hinwil (CH); NOTZ, Markus, 8762 Schwändi (CH); SCHWITTER, Remo, 8753 Mollis (CH)
(74) Vertreter: Wilhelm, Ludwig
(86) Internationale Anmeldenummer: PCT/EP2016/060854
(87) Internationale Veröffentlichungsnummer: WO 2016/202509

(56) Entgegenhaltungen:
- EP-A2- 2 281 675
- WO-A1-2011/003694
- DE-A1- 10 242 290
- DE-A1- 10 342 012
- DE-A1-102008 007 793
- JP-A- 2009 255 463
- JP-A- 2010 234 584

## Beschreibung

Die vorliegende Erfindung betrifft eine Kniehebel-Schließeinheit für eine Spritzgießmaschine gemäß dem Oberbegriff des Anspruchs 1.

Eine Kniehebel-Schließeinheit umfasst in der Regel eine feststehende Formaufspannplatte, eine bewegliche Formaufspannplatte sowie eine Abstützplatte. Zwischen der Abstützplatte und der beweglichen Formaufspannplatte ist ein Kniehebelmechanismus angeordnet, der mittels einer Antriebsvorrichtung betätigt werden kann. Der Kniehebelmechanismus besteht aus mehreren gelenkig miteinander verbundenen Hebeln, die durch Gelenke mit der Abstützplatte und der beweglichen Formaufspannplatte verbunden sind. Um den Kniehebelmechanismus zwischen einer eingeklappten Stellung der Hebel und einer ausgeklappten Stellung der Hebel - auch Streck- oder Totpunktlage des Kniehebelmechanismus genannt - betätigen zu können, ist die Antriebsvorrichtung mit einem Kreuzkopf oder einer Platte, die eine ähnliche Funktion erfüllt, wirkverbunden, der seinerseits mit einem oder mehreren Hebeln des Kniehebelmechanismus gelenkig wirkverbunden ist. Die Antriebsvorrichtung dient zum Öffnen und Schließen der Kniehebel-Schließeinheit und soll auch zur Aufbringung der Schließkraft ausgebildet sein. Dabei unterscheiden sich die beiden Betriebsphasen des Öffnens und Schließens einerseits, und des Aufbringens der Schließkraft andererseits, in ihrem Anforderungsprofil erheblich. Beim Öffnen und Schließen sollte die bewegliche Aufspannplatte möglichst schnell verfahren werden, wobei lediglich die MassenTrägheitsmomente und Reibungen überwunden werden müssen. Diese Verfahrbewegung erfolgt oftmals auch über einen längeren Weg. Beim Aufbringen der Schliesskraft führen die Betätigungselemente einen Weg aus, dieser wirkt sich an den sich berührenden Platten jedoch als Kraft aus. Der beim Aufbringen der Schliesskraft zurückgelegte Weg ist notwendig um die elastische Dehnung der Bauteile unter Schliesskraft zu kompensieren. Es sollen enorme Schließkräfte aufgebracht werden, um die Hälften eines Spritzgießwerkzeugs mit der geforderten Kraft aufeinanderdrücken und zuhalten zu können. Zum Aufbringen der Schliesskräfte kann der Hub des Kniehebels oder ein unabhängig vom Kreuzkopf installierter, separater Antrieb genutzt werden.

Aus dem Stand der Technik sind verschiedene Typen von Kniehebel-Schließeinheiten bekannt, bei denen zumindest ein wesentlicher Teil der Öffnungs- und Schließbetätigung mittels eines Elektromotors bewerkstelligt wird. Dabei dient der Elektromotor insbesondere dazu, die Schließeinheit zu öffnen und zu schließen, was er energieeffizient und rasch bewerkstelligen kann. Der Elektromotor kann auch dazu dienen, zumindest einen Teil, eventuell einen Großteil der Schließkraft aufzubringen. Zusätzlich zum Elektromotor können allerdings auch gesonderte hydraulische Antriebe vorgesehen sein. Für den hydraulischen Antrieb können einfache und marktübliche Kolbenzylindersysteme verwendet werden. Diese Kolbenzylindersysteme können auch doppelt wirkend ausgebildet sein, so dass sie einerseits zum Aufbringen der Schließkraft, andererseits aber auch unterstützend zum Aufreißen der Schließeinheit beim Start des Öffnungsvorganges verwendet werden können. Der Hydraulikzylinder eines solchen Kolbenzylindersystems kann über ein einfaches Ventil mit einer Hydraulikversorgung verbunden sein. Bei diesem Ventil kann es sich um ein einfaches Schaltventil handeln, welches wahlweise den doppeltwirkenden Kolben in beide Richtungen beaufschlagen oder ihn "auf Leerlauf" stellen kann. Bei einer solchen Leerlaufstellung würde der Kolben frei hin und her geschoben werden können.

Eine Kniehebel-Schließeinheit der vorgenannten Art ist aus der JP2010234584A bekannt, wobei ein Elektromotor zum Verfahren des Kreuzkopfs vorgesehen ist und der zusätzliche hydraulische Antrieb von Kolbenzylindersystemen gebildet ist, die zwischen der beweglichen Formaufspannplatte und der feststehenden Formaufspannplatte angeordnet sind. Der Hydraulikzylinder des Kolbenzylindersystems ist hierbei an der feststehenden Formaufspannplatte befestigt und die Kolbenstange des Kolbenzylindersystems ist an der beweglichen Formaufspannplatte befestigt.

Eine weitere Kniehebel-Schließeinheit der vorgenannten Art ist schematisch in der WO2011003694A1 beschrieben, wobei ein Elektromotor zum Verfahren des Kreuzkopfs vorgesehen ist und wobei in verschiedenen Ausführungsformen mittels hydraulischer Zusatzantriebe die Haupthebel in die Streck- bzw. Totpunktlage gebracht werden können. Diese Zusatzantriebe sind zwischen dem Kreuzkopf einerseits und den symmetrisch zu beiden Seiten der zentralen Achse angeordneten, zwischen der Abstützpatte und der beweglichen Formaufspannplatte wirkenden Haupthebeln andererseits angeordnet. In einer ersten Ausführungsform sind Hydraulikzylinder in oder an dem Kreuzkopf vorgesehen. Die zugehörigen Kolbenstangen sind jeweils mit einem an einem Haupthebel angebrachten Verbindungshebel wirkverbunden. In einer weiteren Ausführungsform sind die Verbindungshebel zwischen Kreuzkopf und Haupthebel selbst als Kolbenzylindersystem ausgebildet. Hierbei kann beispielsweise der Zylinder gelenkig an einem der Haupthebel angebracht sein und die Kolbenstange kann gelenkig mit dem Kreuzkopf wirkverbunden sein.

Die EP2456607B1 offenbart schematisch eine weitere Kniehebel-Schließeinheit mit einem Elektromotor zum Verfahren des Kreuzkopfs und mit hydraulischen Zusatzantrieben, um die Haupthebel in die Streck- bzw. Totpunktlage bringen zu können. In einigen Ausführungen ist der hydraulische Zusatzantrieb zwischen der Abstützplatte und den mit der Abstützplatte verbundenen Haupthebeln angeordnet. In anderen Ausführungen ist der hydraulische Zusatzantrieb zwischen der beweglichen Formaufspannplatte und den mit der beweglichen Formaufspannplatte verbundenen Haupthebeln angeordnet. Ist der hydraulische Zusatzantrieb mit den Haupthebeln verbunden, ist bei horizontaler Lage des Antriebs die Wirkrichtung ungünstig zur Leistungsrichtung. Die übertragbare Energie ist gering, gleichzeitig muss die Auslegung der Konstruktion entsprechend stabil sein. Liegt der hydraulische Zusatzantrieb vertikal, so ist die geometrische Anordnung kritisch, denn der Bauraum ist beschränkt. Eine weitere Ausführungsform sieht die Anordnung von hydraulischen Zusatzantrieben zwischen zwei einander gegenüberliegenden und an der beweglichen Formaufspannplatte angebrachten Haupthebeln vor. Unberücksichtigt bleibt, dass die Haupthebel bei ihrer Bewegung in die Offenstellung der Schließeinheit in Richtung der zentralen Achse stark einklappen, so dass eine praktische Umsetzung schwierig werden dürfte.

Aus der JPH10258451A ist eine Kniehebel-Schließeinheit bekannt, bei welcher eine zusätzliche bewegliche Hilfsplatte zwischen der beweglichen Formaufspannplatte und der Abstützplatte vorgesehen ist. In dieser Hilfsplatte ist ein Hydraulikzylinder integriert, dessen Kolben mit einer Kolbenstange verbunden ist, die aus der Hilfsplatte herausgeführt und mit der beweglichen Formaufspannplatte wirkverbunden ist. Der elektrisch angetriebene Kniehebelmechanismus ist antriebstechnisch mit der Abstützplatte und der Hilfsplatte wirkverbunden.

Das Dokument DE 10 2008 007793 A1 offenbart einen Hybridantrieb mit einem mitgeschlepptem Zylinder und einem Hydrospeicher zur Erzeugung einer Stellbewegung und zur Aufbringung einer großen Haltekraft, insbesondere zum Bewegen von Formwerkzeugen sowie zum Aufbringen einer Schließkraft hierauf. Der Hybridantrieb umfasst einen Spindeltrieb für die Stellbewegung und eine Differentialzylindereinheit zum Aufbringen der Haltekraft. Die Kolbenstange der Differentialzylindereinheit ist mit einem axial bewegten Bauteil des Spindeltriebs verbunden. Ferner ist ein Hydrospeicher vorhanden, in den beim Ausfahren der Kolbenstange Druckmittel aus dem kolbenstangenseitigen, ringförmigen Druckraum verdrängbar ist, wobei Druckmittel aus einem Tank in den kolbenstangenabseitigen Druckraum nachfließt. Zum Aufbringen der erforderlichen Haltekraft wird der kolbenstangenabseitige Druckraum vom Tank abgesperrt und mit dem Hydrospeicher verbunden.

Das Dokument EP 2 281 675 A2 offenbart eine Antriebsvorrichtung mit einem an einer Spindelaufnahme abgestützten Spindeltrieb zur Verstellung eines Arbeitselements. Das Arbeitselement ist beispielsweise eine Schließeinheit für ein Werkzeug wie eine Zweiplattenspritzgießmaschine. Die Spindelaufnahme ist an einem Kraftübersetzer abgestützt, der zwei Hydraulikzylinder aufweist. Über eine Kolbenstange des einen Hydraulikzylinders ist die Spindelaufnahme gegen einen Anschlag vorspannbar, wobei bei einer auf das Arbeitselement entgegen einer Vorspannkraft wirkenden Widerstandskraft, die größer als die Vorspannkraft ist, die Spindelaufnahme gegen die Vorspannkraft bewegbar ist. Bei dieser Bewegung entsteht eine Kraft, die von der Spindelaufnahme über den Kraftübersetzer mit einer entsprechend dem Übersetzungsverhältnis größeren Kraft auf das Arbeitselement beaufschlagt wird.

Ausgehend von dem vorstehend genannten Stand der Technik liegt der Erfindung die Aufgabe zugrunde, eine weitere Kniehebel-Schließeinheit mit einem elektrisch angetriebenen Kreuzkopf und einem zusätzlichen hydraulischen Antrieb anzugeben, die sich durch ein konstruktiv vereinfachtes Gesamtkonzept auszeichnet, und die insbesondere für Schnellläufer-Spritzgießmaschinen mit kurzen Zykluszeiten geeignet ist.

Die Lösung dieser Aufgabe erfolgt durch eine Kniehebel-Schließeinheit mit den Merkmalen von Anspruch 1. Vorteilhafte Ausgestaltungen und Weiterentwicklungen finden sich in den Unteransprüchen.

Dadurch, dass zusätzlich zu dem elektrischen Antrieb ein hydraulischer Antrieb vorgesehen ist, der mit dem Kreuzkopf in Wirkverbindung und ein mit einem Druckfluid beaufschlagbares Kolbenzylindersystem aufweist, können die Vorteile der oben genannten Typen von Kniehebel-Schließeinheiten beibehalten werden, nämlich einerseits den elektrischen Antrieb vorwiegend für die Verfahrbewegung vorzusehen und diesbezüglich optimiert auszulegen sowie je nach Betriebsweise die Nutzung der Rekuperation und andererseits den hydraulischen Zusatzantrieb vorwiegend für die Erzeugung der Schließkraft vorzusehen und diesbezüglich optimiert auszulegen. Der Zylinder des Kolbenzylindersystems kann ortsfest sein und die Kolbenstange des Kolbenzylindersystems kann mit dem Kreuzkopf antriebstechnisch in Wirkverbindung stehen. Es kann aber auch so sein, dass die Kolbenstange des Kolbenzylindersystems ortsfest ist und der Zylinder des Kolbenzylindersystems mit dem Kreuzkopf antriebstechnisch in Wirkverbindung steht.

Als Kreuzkopf im Sinne der vorliegenden Erfindung ist jedes konstruktive Element zu verstehen, das entlang der Maschinenlängsachse hin und her bzw. vor und zurück verfahren werden kann und an dem Hebel eines Kniehebelmechanismus angebracht werden können. Der Kreuzkopf kann also beispielsweise in Draufsicht in Blickrichtung der Maschinenlängsachse die Gestalt eines Kreuzes aufweisen. Der Kreuzkopf kann aber auch als Platte ausgebildet sein. Denkbar sind auch weitere Ausgestaltungen. Es geht lediglich darum, dass der Kreuzkopf als Lagerstelle ausgebildet ist, wobei einerseits ein oder mehrere Antriebe zum Verfahren des Kreuzkopfes entlang der Maschinenlängsachse am Kreuzkopf angebracht bzw. gelagert sind, und wobei andererseits ein Kniehebelmechanismus an dem Kreuzkopf gelenkig angebracht bzw. gelagert ist. Der Kreuzkopf ist immer geführt, beispielsweise durch Gleitbahnen oder Säulen.

Da außerdem erfindungsgemäß vorgesehen ist, dass die Länge des Zylinders und die Länge der Kolbenstange derart aufeinander abgestimmt und ausgelegt sind, dass der hydraulische Antrieb den Verfahrweg des Kreuzkopfs beim Verfahren der beweglichen Formaufspannplatte zwischen einer Offenstellung der Schließeinheit, in welcher der Kniehebelmechanismus eingeklappt ist und einer Schließstellung, in welcher sich der Kniehebelmechanismus in einer vorgebbaren Strecklage befindet und Schließkraft aufgebaut ist, mitmachen kann, ist es zudem nicht erforderlich, den hydraulischen Antrieb zu einem geeigneten Zeitpunkt mechanisch hinzuzuschalten, wie dies beim vorgenannten Stand der Technik der Fall ist. Während das mechanische Hinzuschalten des hydraulischen Antriebs oder ein mechanisches Umschalten auf den hydraulischen Antrieb einen gewissen Zeitaufwand erfordert und somit Zykluszeit kostet, wird mit der erfindungsgemäßen Kniehebel-Schließeinheit erreicht, dass die Zykluszeit gegenüber dem vorgenannten Stand der Technik verkleinert wird, was insbesondere für den Betrieb von Schnellläufer-Spritzgießmaschinen vorteilhaft ist.

Demzufolge ist ein Kerngedanke der vorliegenden Erfindung, an dem Kreuzkopf sowohl einen elektrischen Antrieb als auch einen hydraulischen Antrieb vorzusehen und das Kolbenzylindersystem des hydraulischen Antriebs so auszulegen, dass das Kolbenzylindersystem nicht nur einen kurzen Hub für den Schließkraftaufbau macht, sondern dass dieses Kolbenzylindersystem so ausgelegt ist, dass es den ganzen Hub beim Verfahren des Kreuzkopfs und damit beim Verfahren der beweglichen Formaufspannplatte mitmachen kann. Es geht also keine unnötige Zeit verloren, um je nach Betriebsweise von einem Antrieb auf den anderen Antrieb mechanisch umzuschalten oder zum einen Antrieb den anderen Antrieb mechanisch hinzuzuschalten, sondern die Ansteuerungsweise der Antriebe wird zeitverlustfrei angepasst. Auch spart man sich steuerungstechnische Maßnahmen, um dieses mechanische Umschalten in möglichst kurzer Zeit und möglichst "reibungslos" durchführen zu können.

Ein weiterer Vorteil der Erfindung liegt darin, dass der elektrische Antrieb im Bedarfsfall wie oben schon angedeutet von dem hydraulischen Antrieb beim Verfahren der beweglichen Formaufspannplatte unterstützt wird. Damit kann die Fahrbewegung noch schneller gemacht werden. Gegebenenfalls kann der elektrische Antrieb auf eine geringere Leistung ausgelegt werden.

Je nach Anwendungsfall kann es vorteilhaft sein, die Fahrbewegung rein elektrisch zu machen und in dieser Zeit den Hydraulikzylinder auf Leerlauf zu schalten und erst für die Erzeugung der Schließkraft den Hydraulikzylinder mit Druck zu beaufschlagen. Es gibt aber auch Anwendungsfälle, gerade solche bei denen kurze Öffnungshübe gefahren werden, bei denen mit dem hydraulischen Antrieb gefahren wird und bei denen der elektrische Antrieb zur Unterstützung bei Schliesskraftaufbau zugeschaltet wird.

Für den elektrischen Antrieb können an sich bekannte Antriebskonzepte verwendet werden. Beispielsweise kann für den elektrischen Antrieb eine mit dem Kreuzkopf in Wirkverbindung stehende Zahnstange und ein von einem Elektromotor angetriebenes Zahnradgetriebe, dessen Abtriebsritzel mit der Zahnstange in Eingriff steht, vorgesehen werden. Ebenso ist es möglich, für den elektrischen Antrieb eine Mutter-Spindel-Kombination zu verwenden, wobei vorzugsweise die Mutter von einem Elektromotor antreibbar und die Spindel mit dem Kreuzkopf wirkverbunden ist. Denkbar ist aber auch, dass die Spindel von dem Elektromotor angetrieben wird und die Mutter mit dem Kreuzkopf wirkverbunden ist.

Für den hydraulischen Antrieb können ein an eine Druckmittelquelle angeschlossener hydraulischer Akkumulator und/oder eine Hydraulikpumpe eingesetzt werden. Demzufolge kann ein hydraulischer Akkumulator oder eine Pumpe vorgesehen werden, um ein Druckfluid aus einem Druckfluidvorratsbehälter, insbesondere aus einem Tank, zu dem Zylinder des Kolbenzylindersystems zu fördern und den Druckraum für den Schließdruck mit dem erforderlichen Druck zu beaufschlagen. Alternativ dazu oder zusätzlich dazu kann auch ein Akkumulator vorgesehen werden, dessen Druckleitung an den Druckmittelraum für den Schließdruck angeschlossen ist.

Vorzugsweise eignet sich ein bereits bei der Spritzgießmaschine ohnehin vorhandenes hydraulisches Antriebssystem mit einem Akkumulator, in dem ein Druckfluid mit einem bestimmten Druck vorgehalten wird. Solche Akkumulatorsysteme sind insbesondere bei sogenannten Schnellläuferspritzgießmaschinen im Einsatz, bei denen eine hohe Einspritzgeschwindigkeit erzielt werden muss. Diese Einspritzgeschwindigkeiten müssen insbesondere dann erzielt werden, wenn die Form geschlossen ist. Beim Schließen der Form selbst ist ein Betrieb der Einspritzeinrichtung während des Grossteils des Hubs nicht notwendig, so dass das für die Einspritzeinrichtung ohnehin vorhandene Akkumulatorsystem auch für den hydraulischen Antrieb oder die hydraulischen Antriebe zum Verfahren des Kreuzkopfs verwendet werden kann.

Als Kolbenzylindersystem kann ein einfach wirkender Zylinder, ein doppelt wirkender Zylinder, ein Gleichlaufzylinder oder, insbesondere bei großen aufzubringenden Kräften, ein Tandemzylinder gewählt werden.

Bevorzugtes Anwendungsgebiet sind 5-Punkt-Kniehebel-Schließeinheiten. Grundsätzlich kann das erfindungsgemäße Antriebskonzept auch bei anderen Kniehebel-Schließeinheiten eingesetzt werden.

Nachfolgend soll die Erfindung anhand von Ausführungsbeispielen und unter Bezugnahme auf die Figuren näher erläutert werden. Es zeigen:
- Figur 1: erste Ausführungsform einer erfindungsgemäßen Kniehebel-Schließeinheit mit einer elektrisch angetriebenen Zahnstangen-Kombination und einem Gleichlaufzylinder, - in geöffnetem Zustand;
- Figur 2: erste Ausführungsform einer erfindungsgemäßen Kniehebel-Schließeinheit mit einer elektrisch angetriebenen Zahnstangen-Kombination und einem Gleichlaufzylinder, - in geschlossenem Zustand, jedoch ohne Schließkraft;
- Figur 3: erste Ausführungsform einer erfindungsgemäßen Kniehebel-Schließeinheit mit einer elektrisch angetriebenen Zahnstangen-Kombination und einem Gleichlaufzylinder, - in geschlossenem Zustand und mit aufgebauter Schließkraft;
- Figur 4: eine Mutter-Spindel-Kombination als alternativer elektrischer Antrieb;
- Figur 5: ein alternatives hydraulisches Kolbenzylindersystem, nämlich einen doppelt wirkender Zylinder;
- Figur 6: eine Ausführungsform für die hydraulische Versorgung;
- Figur 7-9: verschiedene Ausführungsformen der Anordnung von elektrischem und hydraulischem Antrieb am Kreuzkopf.

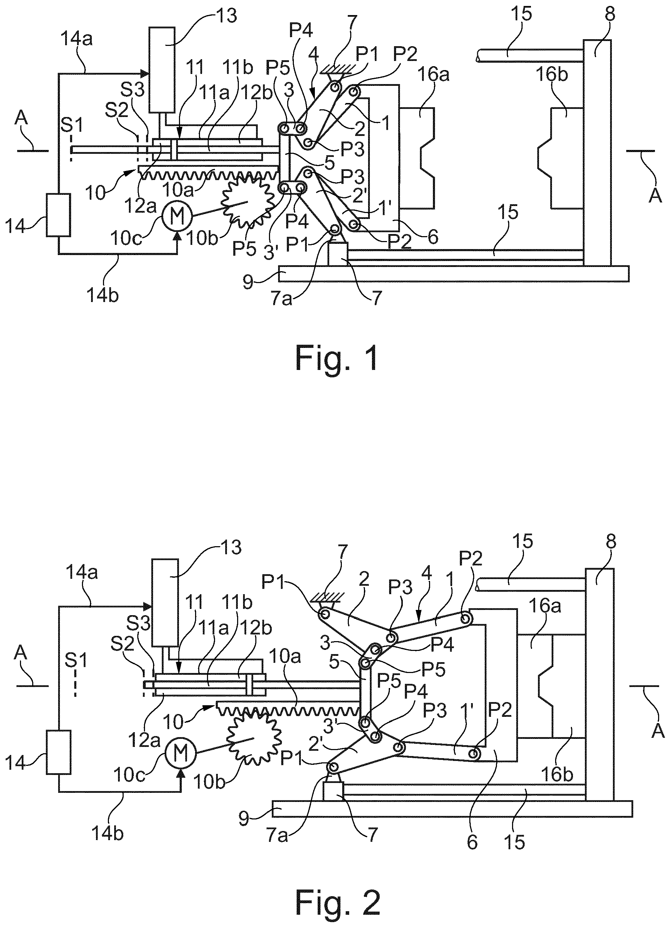

Eine erste Ausführungsform der Erfindung soll nachfolgend unter Bezugnahme auf die Figuren 1, 2 und 3 beschrieben werden. Die in den Figuren 1, 2 und 3 dargestellte Kniehebel-Schließeinheit ist als 5-Punkt-Kniehebel-Schließeinheit ausgebildet und umfasst ein Maschinenbett 9, auf dem eine feststehende Formaufspannplatte 8 , eine bewegliche Formaufspannplatte 6 und eine Abstützplatte 7 angeordnet sind. Auf den beiden Formaufspannplatten 6 und 8 sind Formhälften 16a und 16b eines Spritzgießwerkzeugs befestigt. Zur Aufnahme der Schließkraft sind die Abstützplatte 7 und die feststehende Formaufspannplatte 8 mit Säulen 15 untereinander verbunden. Die bewegliche Formaufspannplatte 6 ist verschieblich an den Säulen 15 oder auf dem Maschinenbett 9 gelagert. Dies ist an sich bekannt und braucht daher nicht näher dargestellt und beschrieben zu werden. Zwischen der beweglichen Formaufspannplatte 6 und der Abstützplatte 7 sind oberhalb und unterhalb der zentralen Maschinenlängsachse A jeweils ein Paar Haupthebel 1, 2 und 1', 2' vorgesehen. Jedes Paar weist einen Haupthebel 2, 2' auf, der an einer Lasche 7a der Abstützplatte 7 an einem ersten Punkt P₁ gelenkig angebracht ist sowie einen mit der beweglichen Formaufspannplatte 6 an einem zweiten Punkt P₂ gelenkig angebrachten Haupthebel 1, 1'. Die Haupthebel sind untereinander jeweils an einem dritten Punkt P₃ gelenkig miteinander verbunden. Zwischen je einem Haupthebel eines Paares und dem Kreuzkopf 5 ist ein Verbindungshebel 3, 3' vorgesehen, der mit seinem einen Ende an einem vierten Punkt P₄ gelenkig mit dem an der Abstützplatte angelenkten Haupthebel 2, 2' und an einem fünften Punkt P₅ gelenkig mit dem Kreuzkopf 5 verbunden ist, wobei der dritte Gelenkpunkt P₃ und der vierte Gelenkpunkt P₄ voneinander beabstandet sind. An dem Kreuzkopf 5 sind sowohl ein elektrischer Antrieb 10 als auch ein hydraulischer Antrieb 11 vorgesehen und stehen antriebstechnisch mit dem Kreuzkopf 5 in Wirkverbindung. Im vorliegenden Ausführungsbeispiel ist der elektrische Antrieb 10 als Zahnstangengetriebe ausgebildet, wobei die Zahnstange 10a mit dem Kreuzkopf wirkverbunden ist und das Abtriebsritzel 10b über ein ein- oder mehrstufiges mechanisches Getriebe von einem Elektromotor 10c angetrieben wird. Das

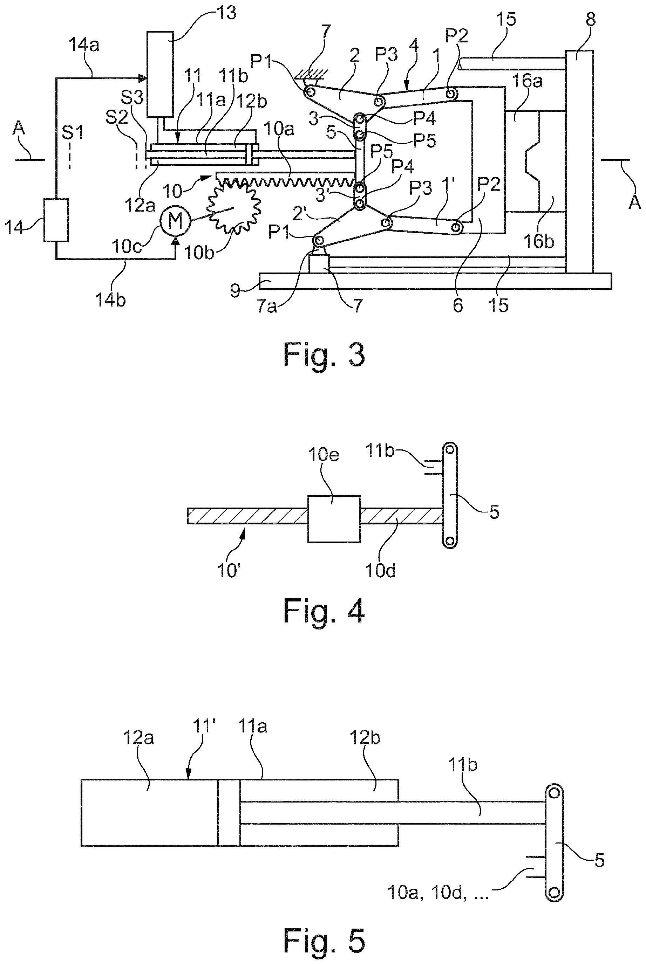

Kolbenzylindersystem 11 ist in der Weise ausgebildet, dass der Zylinder 11a ortsfest ist und beispielsweise an der Abstützplatte 7 befestigt ist und die Kolbenstange 11b ist mit dem Kreuzkopf 5 wirkverbunden. Das Kolbenzylindersystem 11 ist ein doppeltwirkender Gleichlaufzylinder. Die wirksamen Flächen auf beiden Seiten des Kolbens sind jeweils Kreisringflächen und gleich groß. Der Gleichlaufzylinder weist zwei Druckmittelräume 12a und 12b auf. Der Druckmittelraum 12a bildet den Druckraum für die Erzeugung des Schließdrucks und ist an die hydraulische Versorgung angehängt. Der Druckmittelraum 12a kann von einer Pumpe, einem Akkumulator oder von beidem mit Druckfluid beaufschlagt werden. Die Länge des Zylinders 11a und die Länge der Kolbenstange 11b sind so aufeinander abgestimmt und ausgelegt, dass die Kolbenstange 11b den gesamten Verfahrweg S_{V} des Kreuzkopfs 5 beim Verfahren der beweglichen Formaufspannplatte 6 mitmachen kann. Dies soll durch die in den Figuren 1 bis 3 angeordneten vertikalen Linien S₁, S₂ und S₃ veranschaulicht werden. Die Linie S₁ fluchtet mit der hinteren Endlage des Kreuzkopfs 5 (Offenstellung der Schließeinheit gemäß der Figur 1) und die Linie S₂ fluchtet mit einer ersten vorderen Position des Kreuzkopfs 5, welche kurz vor der Totpunktlage des Kniehebelmechanismus liegt und in der Regel derjenigen Position entspricht, bei welcher die Formhälften 16a und 16b aneinander anliegen und die Trennebene geschlossen ist (Figur 2). Die Linie S₃ entspricht der zweiten vorderen Position des Kreuzkopfs 5, welche derjenigen Position entspricht, in welcher sich der Kniehebelmechanismus in seiner Strecklage befindet (Figur 3). Die Strecklage ist normalerweise nicht identisch mit der Totpunktlage. In der Totpunktlage würden die Hebel 1, 2 (bzw. 1', 2') und Gelenke P1, P2 und P3 auf einer Linie liegen und der Winkel zwischen den Hebeln würde 0° betragen. An der Strecklage ist das Übersetzungsverhältnis der Maschine i = ds Kolben/ds bewegliche Formplatte nicht bei unendlich, wie es in der Totpunktlage wäre, sondern bei einem wesentlich geringerem i, je nach Auslegung der Maschine. Diese Linie S₃ entspricht also der vorderen Endlage des Kreuzkopfs 5. Sie liegt kurz vor der Totpunktlage. Der Winkel zwischen den Hebeln in der Strecklage beträgt dann einige wenige Grad. Typische Werte liegen zwischen 1° und 4°, vorzugsweise zwischen 2° und 3°. Grundsätzlich wäre es aber auch denkbar, den Kniehebelmechanismus bis in die Totpunktlage zu verfahren. Die Totpunktlage und die Strecklage wären dann deckungsgleich. Im Falle, dass ein Aktuator direkt auf diesen sich in der Totpunktlage befindlichen Kniehebel einwirkt, muss dieser nahezu senkrecht an einem Hebel angreifen, um den Kniehebelmechanismus wieder aus dem Totpunkt herauszufahren.

Die Figur 4 zeigt einen alternativen elektrischen Antrieb. Anstelle des Zahnstangenantriebs aus den Figuren 1, 2 und 3 ist nunmehr ein von einem Elektromotor angetriebenes Mutter-Spindel-System, vorgesehen. Die Spindel 10d ist antriebstechnisch mit dem Kreuzkopf 5 verbunden, die Spindelmutter 10e wird vom Elektromotor angetrieben.

Die Figur 5 zeigt ein alternatives Kolbenzylindersystem 11'. Es weicht insofern von dem Kolbenzylindersystem 11 ab, als bei dem hier gezeigten Ausführungsbeispiel die Kolbenstange nicht durchgehend ausgebildet ist, d.h. es ist kein Gleichlaufzylinder, sondern ein doppelt wirkender Zylinder.

Die Betriebsweise der erfindungsgemäßen Kniehebel-Schließeinheit ist wie folgt. Ausgehend von der geöffneten Stellung gemäß der Figur 1 wird zunächst nur der Elektromotor 10c betrieben und das Ritzel 10b in einer solchen Richtung drehangetrieben, dass die Zahnstange 10a in Maschinenlängsrichtung auf die bewegliche Formaufspannplatte 6 zu bewegt wird und damit der Kreuzkopf 5 ebenfalls in diese Richtung verfahren wird. Dadurch werden die beiden Paare von Haupthebeln mittels der beiden Verbindungshebeln 3, 3' nach außen aufgeklappt und erreichen gegen Ende der Verfahrbewegung die in der Figur 2 gezeigte Position, in welcher die Formhälften 16a und 16b geschlossen sind (Formgeschlossenposition).
Das Kolbenzylindersystem 11 läuft während der vorgenannten Fahrbewegung ohne Antriebsfunktion mit (Leerlauf), d.h. die Kolbenstange 11b wird von dem Kreuzkopf 5 einfach mitgenommen. Die bewegliche Formplatte wird zunächst beschleunigt, fährt dann mit einem bestimmten Geschwindigkeitsprofil und wird vor Kontakt der beiden Formhälften 16a, 16b abgebremst, damit keine Schäden am Werkzeug oder an der Schliesseinheit entstehen. Während des Bremsvorgangs kann der elektrische Antrieb in Rekuperation geschaltet werden.

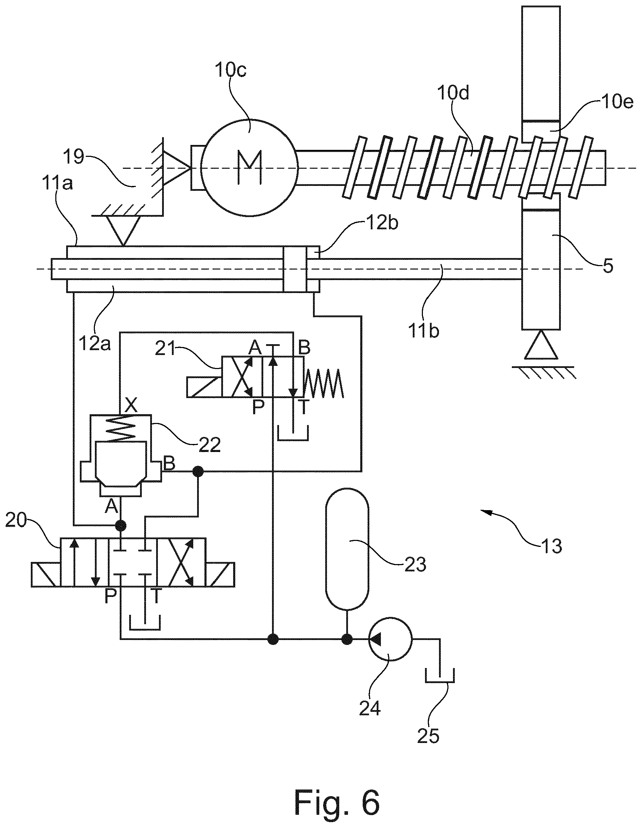

Gegen Ende der Verfahrbewegung wird zu einem vorgebbaren Zeitpunkt oder einer vorgebbaren Stellung der Schließeinheit das Kolbenzylindersystem 11 aktiv geschaltet. Vorzugsweise wird das Kolbenzylindersystem 11 dann aktiv geschaltet, wenn die Schließeinheit kurz vor dem in der Figur 2 dargestellten geschlossenen Zustand ist oder wenn die Formplatten bereits Kontakt haben. Die Kolbenstange 11b hat die Position S2 erreicht. Die Aktivschaltung bedeutet, dass der Druckmittelraum 12a mit einem Druckfluid aus der hydraulischen Versorgung 13 (siehe Figur 6) beaufschlagt wird, bis der gewünschte Schließdruck in dem Druckmittelraum 12a erreicht worden ist. Während der Aktivschaltung des Kolbenzylindersystems 11 kann der Elektromotor 10c weiterbetrieben, auf Leerlauf oder in Rekuperation geschaltet werden. Diese Leerlauf- oder Rekuperationssituation lässt drei Zustände des elektrischen Antriebs zu:
1) Der elektrische Antrieb wird durch die Achsbewegung, betrieben durch den hydraulischen Antrieb, angetrieben. Der hydraulische Antrieb treibt durch seine abgegebene Leistung nicht nur die bewegliche Formaufspannplatte an, sondern schleppt den elektrischen Antrieb mit. Dem elektrischen Antrieb wird keine elektrische Energie zu- oder abgeführt.
2) Der elektrische Antrieb wird aktiv durch den elektrischen Motor angetrieben, so dass aber keine Energie auf den Kreuzkopf übertragen wird. Die Verfahrbewegung wird rein durch den hydraulischen Antrieb ausgeführt. Der hydraulische Antrieb schleppt den elektrischen Antrieb nicht mit, sondern der Elektromotor bringt diesen Teil der Antriebsleistung auf.
3) Rekuperation. Der elektrische Antrieb setzt mechanische Energie vom hydraulischen Antrieb in elektrische Energie um, wobei Fall 3) immer nur im Zusammenwirken mit Fall 1) oder 2) auftritt.

Die beiden Paare von Haupthebeln werden mittels der beiden Verbindungshebeln 3, 3' weiter aufgeklappt, bis der in der Figur 3 dargestellte Zustand erreicht ist. Dies bewirkt den Schliesskraftaufbau mit einer kleinen Bewegung des Kolbens beziehungsweise des elektrischen Antriebs. Der Kniehebelmechanismus befindet sich nun in der oben beschriebenen Strecklage, also kurz vor der Totpunktlage.

Nach dem Ende der Einspritz- und Nachdruckphase kann die Schließeinheit entlastet und dann geöffnet werden. Bei der Entlastung kann der elektrische Antrieb die beschriebenen Betriebszustände einnehmen. Zum Entlasten der Schliesseinheit kann gegebenenfalls der Druckmittelraum 12b mit einem Druckfluid beaufschlagt werden und der Druckmittelraum 12a auf Ablauf geschaltet werden. Dies setzt eine entsprechende Ventilsteuerung der hydraulischen Versorgung 13 voraus. Nach einem vorgebbaren Öffnungshub kann das Kolbenzylindersystem 11 wieder auf Leerlauf geschaltet werden und der weitere Verfahrweg bis zu endgültigen Offenstellung gemäß der Figur 2 kann ausschließlich elektrisch erfolgen. Die Ansteuerung des elektrischen Antriebs und des hydraulischen Antriebs kann von der zentralen Steuerung 14 der Spritzgießmaschine vorgenommen werden. Dies soll schematisch angedeutet werden durch die von der Steuerung 14 ausgehenden Signalleitungen 14a und 14b.

Es werden sechs Fälle unterschieden, wie das System aus elektrischem und hydraulischem Antrieb betrieben werden kann:
1) Die Fahrbewegung erfolgt rein durch den elektrischen Antrieb, der hydraulische Antrieb ist im Leerlauf.
2) Die Fahrbewegung erfolgt rein durch den hydraulischen Antrieb, der elektrische Antrieb ist im Leerlauf.
3) Die Fahrbewegung erfolgt kombiniert elektrisch und hydraulisch. Dies kann dann der Fall sein, wenn die Schliesseinheit möglichst schnell auf und zu gefahren werden soll.
4) Der Schliesskraftaufbau wird rein elektrisch durchgeführt. Der hydraulische Antrieb ist im Leerlauf, er wird aber nicht benötigt, falls die Kräfte für den Schliesskraftaufbau gering sind.
5) Der Schließkraftaufbau verläuft rein hydraulisch, der elektrische Antrieb ist im Leerlauf.
6) Der Schließkraftaufbau wird durch die Kombination aus elektrischem und hydraulischem Antrieb sichergestellt.

Diese vorgenannten sechs Fälle können nun beliebig vom Maschinenhersteller, beispielsweise für einen Betrieb, bei dem möglichst wenig Energie verbraucht wird, oder einem Betrieb, bei dem die Bewegungszeiten möglichst gering sind, vorkonfektioniert werden, oder, lässt der Maschinenhersteller die Wahl der Kombination von Antrieben offen, vom Anwender frei und unabhängig voneinander zusammen gestellt werden. Beispielsweise kann das Zufahren durch den elektrischen Antrieb erfolgen, der hydraulische ist im Leerlauf, und für den Schliesskraftaufbau wirken beide Antriebe. Je nach Anwendungsfall kann der hydraulische Antrieb nur beim Zufahren oder nur beim Auffahren oder bei beiden Verfahrbewegungen aktiv geschaltet werden. Der Betrieb der elektrischen Achse in Rekuperation kann bei den oben genannten Fällen 2), 3), 5) und 6) zugeschaltet werden um Energie zurückzugewinnen. Eine Rekuperation ist immer dann nicht möglich, wenn durch den elektrischen Antrieb angetrieben wird oder wenn dieser vollkommen inaktiv ist. Auch soll es möglich sein zwischen den Betriebsarten während des Fahrens oder während des Schliesskraftaufbaus zu wechseln. Es ist also möglich einen Antrieb nicht nur vor Einleiten eines Prozessschritts des Formschlusses aktiv zu schalten, sondern auch wenn dieser bereits eingeleitet ist.

Die Figur 6 zeigt eine Ausführungsform für eine hydraulische Versorgung 13 des Kolbenzylindersystems 11. Dieses Hydrauliksystem umfasst drei Ventile 20, 21 und 22, einen Akkumulator 23 und eine Pumpe 24. Die Pumpe 24 ist an eine Druckmittelquelle 25 angeschlossen und kann den Akkumulator 23 mit Druckmittel auffüllen und unter einen gewünschten Druck setzen. Das Druckmittel kann von der Pumpe 24 auch direkt zu den Ventilen geleitet werden. Je nach Schaltstellung der Ventile werden die Druckmittelräume 12a und 12b auf Zulauf oder auf Ablauf geschaltet. Wenn die Kolbenstange 11b nur von dem Kreuzkopf 5 mitgenommen wird, können die Ventile so geschaltet werden, dass lediglich eine Umwälzung von Druckmittel zwischen den Druckmittelräumen 12a und 12b erfolgt. Der elektrische Antrieb ist als Mutter-Spindel-Kombination ausgeführt, wobei jedoch im Unterschied zu der Darstellung in der Figur 4 nunmehr die Spindel 10d von dem Motor 10c drehangetrieben wird und die Spindelmutter 10e in dem Kreuzkopf 5 drehfest angebracht ist. Das Bezugszeichen 19 bezeichnet ein Lager bzw. eine Lagerstelle für die Antriebe.

Gemäß einer Ausführungsform wird das Kolbenzylindersystem 11 von dem Akkumulator 23 gespeist. Der Akkumulator 23 wird wiederum durch die Pumpe 24 gespeist. Die hydraulische Versorgung ist auf die kurzzeitig geforderte Energiemenge ausgelegt. Die Pumpenleistung wird durch die notwendige mittlere Leistung bestimmt.

Bei Leistungsaufnahme des hydraulischen Verbrauchers 11 wird das Öl aus dem Akkumulator 23 bezogen, allfällig überschüssige Druckenergie wird in Wärme umgewandelt oder kann durch die elektrische Achse rekuperiert werden.

Bei Leerlauf der hydraulischen Achse können die notwendigen Ölmengen sowohl über den Akkumulator 23 bezogen und der Überschuss an den Tank T abgegeben werden oder aber indem das Öl zwischen den beiden Druckmittelräumen 12a und 12b umgewälzt wird und der sich je nach Zylinderausführung ergebende Ölmangel respektive Ölüberschuss entweder über das Akkumulatorsystem 23 bezogen oder an den Tank T abgegeben wird, oder über einen weiteren, verbrauchernahen Ölspeicher (hier nicht dargestellt) bezogen oder an diesen abgegeben werden kann.

Bei einer weiteren Ausführungsform der hydraulischen Versorgung wird das Kolbenzylindersystem 11 nur von der Pumpe 24 betrieben. Bei Leistungsaufnahme des hydraulischen Verbrauchers wird das Öl über die Pumpe 24 in einen der Druckmittelräume 12a oder 12b gefördert. Die Auslegung der Pumpe 24 gibt die Spitzenleistung und Dynamik am Verbraucher, d.h. an dem Kolbenzylindersystem 11 vor. Mit den Komponenten Pumpe, deren Motor und gegebenenfalls einem Frequenzumrichter werden sowohl Kosten, wie auch die Leistungsfähigkeit und Energieeffizienz beeinflusst. Ist der hydraulische Antrieb im Leerlauf, wird ein Druckmittelraum durch die Pumpe 24 mit Öl gespeist, der andere Druckmittelraum gegen den Tank T entleert. Alternativ kann das Öl zwischen den beiden Zylinderkammern umgewälzt werden und der sich je nach Zylinderausführung ergebende Ölmangel respektive Ölüberschuss über die Pumpe bezogen und an den Tank abgegeben werden. Möglich wäre auch, dass die sich bei Umwälzung ergebenden Ölmengen über einen weiteren, verbrauchernahen Ölspeicher bezogen werden oder an diesen abgegeben werden. Die Druckmittelquelle 25 und der bei den Ventilen 20 und 21 angedeutete Tank T bilden üblicherweise ein konstruktive Einheit, d.h. es gibt nur einen einzigen Tank, aus dem Druckmittel entnommen und in den Druckmittel abgegeben werden kann.

Der ausschließliche Betrieb des Kolben-Zylindersystems durch die Pumpe ist aus energetischen Gesichtspunkten weniger interessant. Hingegen werden folgende Betriebsarten als bevorzugt eingeschätzt:
1) Versorgung nur über den Akkumulator
2) Versorgung über den Akkumulator bei einer Fahrbewegung und im Leerlauf mit der Pumpe
3) Eine leistungsabhängig gestaltete Versorgung: Bei einer hohen Leistungsdichte wird auf den Akkumulator zurückgegriffen. Die Pumpe kann gegebenenfalls unterstützend hinzugeschaltet werden. Bei niedriger Leistungsdichte reicht der Betrieb mit der Pumpe aus.
   Mit den kombinierten Versorgungsarten wird es möglich einen leistungsoptimierten oder einen energieoptimierten Modus der Maschine zu definieren, der vom Maschinenbediener abgerufen werden kann.

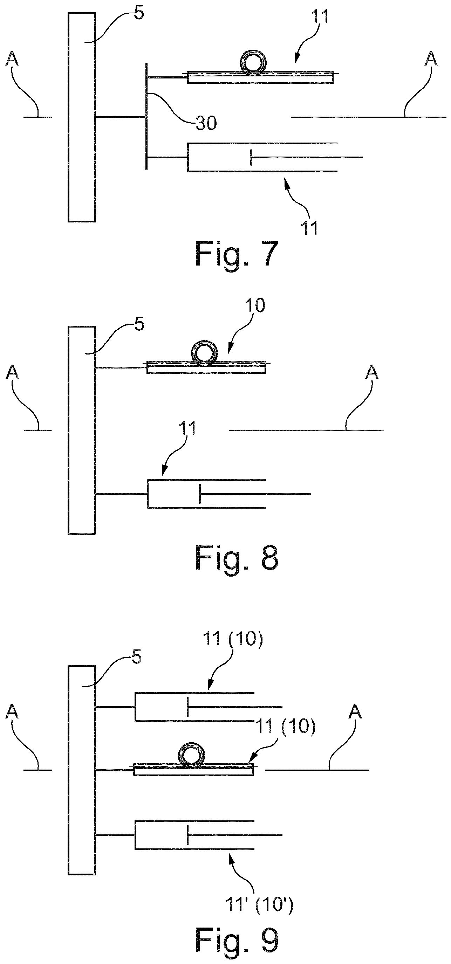

Alternativ zu der in Figur 1 bis 3 dargestellten Ausführungsform können auch mehrere hydraulische Antriebe und/oder mehrere elektrische Antriebe zum Einsatz kommen. Deren Anordnung kann auf unterschiedliche Weisen erfolgen. In den Figuren 7 bis 9 sind beispielhaft verschiedene Anordnungen gezeigt. Weitere Anordnungen sind für den Fachmann leicht realisierbar und werden von der vorliegenden Erfindung mit umfasst: Figur 7: Der elektrische Antrieb 10 und der hydraulische Antrieb 11 liegen parallel, aber beider Kraft zur Erzeugung der Fahrbewegung wird zentrisch auf den Kreuzkopf 5 geführt. Beispielsweise ist dies durch eine Zwischenplatte 30 möglich, auf die die Antriebe angreifen. Die Zwischenplatte 30 ist mit dem Kreuzkopf 5 so gekoppelt, dass die Kopplung mittig am Kreuzkopf 5 angreift.
Figur 8: Sowohl der elektrische Antrieb 10 als auch der hydraulische Antrieb 11 greifen symmetrisch exzentrisch am Kreuzkopf 5 an.
Figur 9: Ein Antriebstyp greift zentrisch am Kreuzkopf 5 an, der andere Antriebstyp symmetrisch exzentrisch. Beispielsweise könnte ein elektrischer Antrieb 10 zentrisch am Kreuzkopf 5 angreifen und zwei hydraulische Antriebe 11, 11' könnten symmetrisch exzentrisch am Kreuzkopf 5 angreifen. Umgekehrt könnte ein hydraulischer Antrieb 11 zentrisch am Kreuzkopf 5 angreifen und zwei elektrische Antriebe 10, 10' könnten symmetrisch exzentrisch am Kreuzkopf 5 angreifen. Dieser Fall soll durch die in Klammern gesetzten Bezugszeichen in der Figur 9 dargestellt sein.
Die Ansichten in den Figuren 7 bis 9 können als Draufsicht oder als Seitensicht angesehen werden.

**Bezugszeichenliste**

| | |
|---|---|
| 1, 1' | Haupthebel an beweglicher Formaufspannplatte |
| 2, 2' | Haupthebel an Abstützplatte |
| 3, 3' | Verbindungshebel |
| 4 | Kniehebelmechanismus |
| 5 | Kreuzkopf |
| 6 | Bewegliche Formaufspannplatte |
| 7 | Abstützplatte |
| 7a | Lasche |
| 8 | Feststehende Formaufspannplatte |
| 9 | Maschinenbett |
| 10 | Elektrischer Antrieb mit Stange |
| 10' | Elektrischer Antrieb mit Spindel |
| 10a | Zahnstange |
| 10b | Abtriebsritzel eines Getriebes |
| 10c | Elektromotor |
| 10d | Spindel |
| 10e | Spindelmutter |
| 11 | Kolbenzylindersystem mit durchgehender Kolbenstange = Gleichlaufzylindersystem |
| 11a | Zylinder |
| 11b | Kolbenstange |
| 11' | Kolbenzylindersystem ohne durchgehende Kolbenstange = doppelt wirkender Zylinder |
| 12a | Druckmittelraum |
| 12b | Druckmittelraum |
| 13 | Hydraulische Versorgung |
| 14 | Steuerung |
| 14a | Signalleitung zum hydraulischen Antrieb |
| 14b | Signalleitung zum elektrischen Antrieb |
| 15 | Säulen |
| 16a | Bewegliche Formhälfte |
| 16b | Feststehende Formhälfte |
| 19 | Lager |
| 20 | Erstes Ventil |
| 21 | Zweites Ventil |
| 22 | Drittes Ventil |
| 23 | Akkumulator |
| 24 | Pumpe |
| 25 | Druckmittelquelle bzw. Tank |
| 30 | Zwischen platte |
| P1-P5 | Gelenkpunkte |

## Patentansprüche

1. Kniehebel-Schließeinheit für eine Spritzgießmaschine umfassend eine feststehende Formaufspannplatte (8), eine bewegliche Formaufspannplatte (6), eine Abstützplatte (7), einen zwischen der Abstützplatte (7) und der beweglichen Formaufspannplatte (6) angeordneten und mit der Abstützplatte (7) einerseits und der beweglichen Formaufspannplatte (6) andererseits in Wirkverbindung stehenden Kniehebelmechanismus (4), einen mit dem Kniehebelmechanismus (4) in Wirkverbindung stehenden und entlang der Maschinenlängsachse (A) verfahrbaren Kreuzkopf (5), sowie mit einem oder mehreren elektrischen Antrieb(en) (10, 10') zum Verfahren des Kreuzkopfs (5),
**dadurch gekennzeichnet, dass**
zusätzlich zu dem oder den elektrischen Antrieb(en) (10, 10') mindestens ein hydraulischer Antrieb vorgesehen ist, der mit dem Kreuzkopf (5) in Wirkverbindung steht und mit dem ein Verfahren des Kreuzkopfes (5) entlang der Maschinenlängsachse (A) erzeugbar ist, wobei der hydraulische Antrieb ein mit einem Druckfluid beaufschlagbares Kolbenzylindersystem (11, 11') aufweist, wobei die Länge (L_{Z}) des Zylinders (11a) und die Länge (L_{S}) der Kolbenstange (11b) derart aufeinander abgestimmt und ausgelegt sind, dass der hydraulische Antrieb den Verfahrweg (S) des Kreuzkopfs (5) beim Verfahren der beweglichen Formaufspannplatte (6) zwischen einer Offenstellung der Schließeinheit, in welcher der Kniehebelmechanismus (4) eingeklappt ist und einer Schließstellung, in welcher sich der Kniehebelmechanismus (4) in einer vorgebbaren Strecklage befindet und Schließkraft aufgebaut ist, mitmachen kann.

2. Kniehebel-Schließeinheit nach Anspruch 1,
**dadurch gekennzeichnet, dass**
der Zylinder (11a) des Kolbenzylindersystems (11, 11') ortsfest ist und die Kolbenstange (11b) des Kolbenzylindersystems (11, 11') mit dem Kreuzkopf (5) antriebstechnisch in Wirkverbindung steht, oder dass die Kolbenstange (11b) des Kolbenzylindersystems (11, 11') ortsfest ist und der Zylinder (11a) des Kolbenzylindersystems (11, 11') mit dem Kreuzkopf (5) antriebstechnisch in Wirkverbindung steht.

3. Kniehebel-Schließeinheit nach einem der vorstehenden Ansprüche,
**dadurch gekennzeichnet, dass**
für die Beaufschlagung des Kolbenzylindersystems (11, 11') mit einem Druckfluid ein an eine Druckmittelquelle angeschlossener Akkumulator (23) und/oder eine Hydraulikpumpe (24) vorgesehen sind

4. Kniehebel-Schließeinheit nach einem der vorstehenden Ansprüche,
**dadurch gekennzeichnet, dass**
das Druckfluid bei Leerlauf des hydraulischen Antriebs zwischen den Druckmittelräumen bzw. Zylinderkammern (12a, 12b) des Kolbenzylindersystems (11, 11') umgewälzt werden kann.

5. Kniehebel-Schließeinheit nach einem der vorstehenden Ansprüche,
**dadurch gekennzeichnet, dass**
für den elektrischen Antrieb (10) eine mit dem Kreuzkopf (5) in Wirkverbindung stehende Zahnstange (10a) und eine von einem Elektromotor antreibbares und mit der Zahnstange (10a) in Eingriff stehendes Zahnrad (10b), insbesondere ein Abtriebsritzel eines Getriebes, vorgesehen sind.

6. Kniehebel-Schließeinheit nach einem der vorstehenden Ansprüche,
**dadurch gekennzeichnet, dass**
für den elektrischen Antrieb (10) eine Mutter-Spindel-Kombination vorgesehen ist, welche beispielsweise als Kugelgewindetrieb oder als Rollengewindetrieb ausgebildet ist, wobei entweder die Mutter (10e) von einem Elektromotor (10c) antreibbar und die Spindel (10d) mit dem Kreuzkopf (5) wirkverbunden ist, oder wobei die Spindel (10d) von einem Elektromotor (10c) antreibbar und die Mutter (10e) mit dem Kreuzkopf (5) wirkverbunden ist.

7. Kniehebel-Schließeinheit nach einem der vorstehenden Ansprüche,
**dadurch gekennzeichnet, dass**
es sich um eine 5-Punkt-Kniehebel-Schließeinheit handelt.

8. Kniehebel-Schließeinheit nach einem der vorstehenden Ansprüche,
**dadurch gekennzeichnet, dass**
zwischen der Abstützplatte (7) und der beweglichen Formaufspannplatte (6) zwei symmetrisch zur zentralen Maschinenlängsachse (A) angeordnete und einander gegenüberliegende Paare von Haupthebeln (1, 2; 1', 2') vorgesehen sind, wobei jedes Paar einen mit der Abstützplatte (7) an einem ersten Punkt (P₁) gelenkig verbundenen Haupthebel (2, 2') und einen mit der beweglichen Formaufspannplatte (6) an einem zweiten Punkt (P₂) gelenkig verbundenen Haupthebel (1, 1') aufweist, die untereinander an einem dritten Gelenkpunkt (P₃) gelenkig miteinander verbunden sind, und wobei jeweils zwischen einem Haupthebel eines Paares und dem Kreuzkopf (5) ein Verbindungshebel (3, 3') vorgesehen ist, der mit einem Ende an einem vierten Gelenkpunkt (P₄) gelenkig mit dem Haupthebel und an einem fünften Gelenkpunkt (P₅) gelenkig mit dem Kreuzkopf (5) verbunden ist, wobei der dritte Gelenkpunkt (P₃) und der vierte Gelenkpunkt (P₄) voneinander beabstandet sind.

9. Kniehebel-Schließeinheit nach einem der vorstehenden Ansprüche,
**dadurch gekennzeichnet, dass**
der oder die elektrischen Antrieb(e) und der oder die hydraulischen Antrieb (e) exzentrisch am Kreuzkopf (5) angreifen und die Achsen der Antriebe (10, 10', 11, 11') symmetrisch zueinander um die Maschinenlängsachse (A) angeordnet liegen.

10. Kniehebel-Schließeinheit nach einem der Ansprüche 1 bis 8,
**dadurch gekennzeichnet, dass**
ein elektrischer Antrieb (10, 10') zentrisch am Kreuzkopf (5) angreift und zwei oder mehr hydraulische Antriebe (11, 11') exzentrisch am Kreuzkopf (5) angreifen, wobei die Achsen der hydraulischen Antriebe (11, 11') symmetrisch zueinander um die Maschinenlängsachse (A) angeordnet liegen, oder dass ein hydraulischer Antrieb (11, 11') zentrisch am Kreuzkopf (5) angreift und zwei oder mehr elektrische Antriebe (10, 10') exzentrisch am Kreuzkopf (5) angreifen, wobei die Achsen der elektrischen Antriebe (10, 10') symmetrisch zueinander um die Maschinenlängsachse (A) angeordnet liegen

11. Kniehebel-Schließeinheit nach einem der vorstehenden Ansprüche,
**dadurch gekennzeichnet, dass**
der oder die hydraulischen Antrieb(e) einerseits und der oder die elektrischen Antrieb(e) andererseits unabhängig voneinander aktiv und inaktiv geschaltet werden können, derart dass der Kreuzkopf (5) ausschließlich hydraulisch oder ausschließlich elektrisch oder in Kombination hydraulisch und elektrisch angetrieben werden kann.

## Claims

1. A toggle clamping unit for an injection moulding machine comprising a stationary platen (8), a movable platen (6), a support plate (7), a toggle mechanism (4) arranged between the support plate (7) and the movable platen (6) and in operative connection with the support plate (7) on the one hand and with the movable platen (6) on the other hand, a cross head (5) in operative connection with the toggle mechanism (4) and movable along the longitudinal axis (A) of the machine, and with one or more electric drives (10, 10') for moving the cross head (5),
**characterized in that**
in addition to the electric drive(s) (10, 10'), at least one hydraulic drive is provided, which is in operative connection with the cross head (5) and by which a movement of the cross head (5) along the longitudinal axis (A) of the machine is able to be generated, wherein the hydraulic drive has a piston-cylinder system (11, 11') able to be acted upon by a pressure fluid, wherein the length (L_{z}) of the cylinder (11a) and the length (Lₛ) of the piston rod (11b) are coordinated with one another and designed such that the hydraulic drive can participate in the travel path (S) of the cross head (5) during the travel of the movable platen (6) between an open position of the clamping unit, in which the toggle mechanism (4) is folded, and a closed position, in which the toggle mechanism (4) is situated in a predeterminable extended position and closing force is built up.

2. The toggle clamping unit according to Claim 1, **characterized in that** the cylinder (11a) of the piston-cylinder system (11, 11') is fixed and the piston rod (11b) of the piston-cylinder system (11, 11') is in operative connection with the cross head (5) by drive technology, or that the piston rod (11b) of the piston-cylinder system (11, 11') is fixed and the cylinder (11a) of the piston-cylinder system (11, 11') is in operative connection with the cross head (5) by drive technology.

3. The toggle clamping unit according to one of the preceding claims, **characterized in that** for the action upon the piston-cylinder system (11, 11') by a pressure fluid, an accumulator (23), connected to a pressure medium source, and/or a hydraulic pump (24) are provided.

4. The toggle clamping unit according to one of the preceding claims, **characterized in that** the pressure fluid, on idling of the hydraulic drive, can be circulated between the pressure medium spaces or respectively cylinder chambers (12a, 12b) of the piston-cylinder system (11, 11').

5. The toggle clamping unit according to one of the preceding claims, **characterized in that** for the electric drive (10), a rack (10a) in operative connection with the cross head (5), and a pinion (10b) able to be driven by an electric motor and in engagement with the rack (10a), in particular an output pinion of a gear, are provided.

6. The toggle clamping unit according to one of the preceding claims, **characterized in that** for the electric drive (10), a nut-spindle combination is provided, which is configured for example as a ball screw drive or as a roller screw drive, wherein either the nut (10e) is able to be driven by an electric motor (10c) and the spindle (10d) is operatively connected with the cross head (5), or wherein the spindle (10d) is able to be driven by an electric motor (10c) and the nut (10e) is operatively connected with the cross head (5).

7. The toggle clamping unit according to one of the preceding claims, **characterized in that** it is a 5-point toggle clamping unit.

8. The toggle clamping unit according to one of the preceding claims, **characterized in that** between the support plate (7) and the movable platen (6), two pairs of main levers (1, 2; 1', 2') are provided, arranged symmetrically to the central longitudinal axis (A) of the machine and lying opposite one another, wherein each pair has a main lever (2, 2') articulatedly connected to the support plate (7) at a first point (P₁), and a main lever (1, 1') articulatedly connected to the movable platen (6) at a second point (P₂), which levers are articulated connected to one another at a third articulation point (P₃), and wherein respectively between one main lever of a pair and the cross head (5), a connecting lever (3, 3') is provided, which is articulatedly connected by one end at a fourth articulation point (P₄) to the main lever, and is articulatedly connected to the cross head (5) at a fifth articulation point (P₅), wherein the third articulation point (P₃) and the fourth articulation point (P₄) are spaced apart from one another.

9. The toggle clamping unit according to one of the preceding claims, **characterized in that** the electric drive (s) and the hydraulic drive(s) engage eccentrically on the cross head (5) and the axes of the drives (10, 10', 11, 11') lie arranged symmetrically to one another around the longitudinal axis (A) of the machine.

10. The toggle clamping unit according to one of Claims 1 to 8, **characterized in that** an electric drive (10, 10') engages centrically on the cross head (5), and two or more hydraulic drives (11, 11') engage eccentrically on the cross head (5), wherein the axes of the hydraulic drives (11, 11') lie arranged symmetrically to one another around the longitudinal axis (A) of the machine, or that a hydraulic drive (11, 11') engages centrically on the cross head (5) and two or more electric drives (10, 10') engage eccentrically on the cross head (5), wherein the axes of the electric drives (10, 10') lie arranged symmetrically to one another around the longitudinal axis (A) of the machine.

11. The toggle clamping unit according to one of the preceding claims, **characterized in that** the hydraulic drive(s) on the one hand, and the electric drive(s) on the other hand can be connected actively and inactively independently of one another, such that the cross head (5) can be driven exclusively hydraulically or exclusively electrically or hydraulically and electrically in combination.

## Revendications

1. Mécanisme à genouillère pour une unité de fermeture d'une machine de moulage par injection comprenant une plaque de serrage de moule fixe (8), une plaque de serrage de moule mobile (6), une plaque d'appui (7), un mécanisme à genouillère (4) disposé entre la plaque d'appui (7) et la plaque de serrage de moule mobile (6) et en liaison active avec la plaque d'appui (7) d'une part et la plaque de serrage de moule mobile (6) d'autre part, une tête de piston (5) en liaison active avec le mécanisme à genouillère (4) et mobile le long de l'axe longitudinal de machine (A), ainsi qu'un ou plusieurs entraînement(s) électrique(s) (10, 10') pour déplacer la tête de piston (5),
**caractérisé en ce**
**qu'**en plus du ou des entraînement(s) électrique(s) (10, 10'), au moins un entraînement hydraulique est prévu qui est en liaison active avec la tête de piston (5) et avec lequel un déplacement de la tête de piston (5) le long de l'axe longitudinal de machine (A) peut être réalisé, dans lequel l'entraînement hydraulique présente un système de cylindres à piston (11, 11') pouvant être alimenté par un fluide sous pression, dans lequel la longueur (L_{Z}) du cylindre (11a) et la longueur (L_{S}) de la tige de piston (11b) sont ainsi coordonnés entre eux et conçus que l'entraînement hydraulique peut faire conjointement le trajet de déplacement (S) de la tête de piston (5) lors du déplacement de la plaque de serrage mobile (6) entre une position ouverte de l'unité de fermeture dans laquelle le mécanisme à genouillère (4) est relevé et une position fermée dans laquelle le mécanisme à genouillère (4) se trouve dans une position d'étirement pouvant être prédéfinie et la force de fermeture constituée.

2. Mécanisme à genouillère pour une unité de fermeture selon la revendication 1, **caractérisé en ce que** le cylindre (11a) du système de cylindres à piston (11, 11') est fixe et la tige de piston (11b) du système de cylindres à piston (11, 11') est en liaison active par entraînement avec la tête de piston (5), ou que la tige de piston (11b) du système de cylindres à piston (11, 11') est fixe et le cylindre (11a) du système de cylindres à piston (11, 11') est en liaison active par entraînement avec la tête de piston (5).

3. Mécanisme à genouillère pour une unité de fermeture selon l'une des revendications précédentes, **caractérisé en ce que** pour l'alimentation du système de cylindres à piston (11, 11') avec un fluide sous pression, un accumulateur (23) raccordé à une source de fluide sous pression et/ou une pompe hydraulique (24) est/sont prévu(s).

4. Mécanisme à genouillère pour une unité de fermeture selon l'une des revendications précédentes, **caractérisé en ce que** le fluide sous pression, lors de la marche à vide de l'entraînement hydraulique, peut être roulé entre les espaces de fluide sous pression, respectivement les chambres de cylindre (12, 12b) du système de cylindres à piston (11, 11').

5. Mécanisme à genouillère pour une unité de fermeture selon l'une des revendications précédentes, **caractérisé en ce que** pour l'entraînement électrique (10), une crémaillère (10a) en liaison active avec la tête de piston (5) et un engrenage (10b), en particulier un pignon de sortie d'un engrenage, engrené avec la crémaillère (10a) et pouvant être entraîné par un moteur électrique, sont prévus.

6. Mécanisme à genouillère pour une unité de fermeture selon l'une des revendications précédentes, **caractérisé en ce que** pour l'entraînement électrique (10), une combinaison tige-écrou est prévue, laquelle par exemple est conçue en tant que vis d'entraînement à billes ou vis d'entraînement à rouleaux satellites, dans lequel soit l'écrou (10e) peut être entraîné par un moteur électrique (10c) et la tige (10d) est en liaison active avec la tête de piston (5), ou soit dans lequel la tige (10d) peut être entraînée par un moteur électrique (10c) et l'écrou (10e) est en liaison active avec la tête de piston (5).

7. Mécanisme à genouillère pour une unité de fermeture selon l'une des revendications précédentes, **caractérisé en ce qu'**il s'agit d'un mécanisme à genouillère pour une unité de fermeture 5 points.

8. Mécanisme à genouillère pour une unité de fermeture selon l'une des revendications précédentes, **caractérisé en ce qu'**entre la plaque d'appui (7) et la plaque de serrage de moule mobile (6), deux paires de levier principaux (1, 2 ; 1', 2') disposées symétriquement à l'axe longitudinal de machine (A) central et se faisant face l'une à l'autre sont prévues, dans lequel chaque paire présente un levier principal (2, 2') relié de manière articulée à la plaque d'appui (7) sur un premier point (P₁) et un levier principal (1, 1') relié de manière articulée à la plaque de serrage de moule mobile (6) sur un deuxième point (P₂), qui sont reliés entre eux sur un troisième point d'articulation (P₃), et dans lequel entre un levier principal d'une paire et la tête de piston (5), un levier de liaison (3, 3') est prévu qui est relié par une extrémité de manière articulée avec le levier principal sur un quatrième point d'articulation (P₄) et relié de manière articulée à la tête de piston (5) sur un cinquième point d'articulation (P₅), dans lequel le troisième point d'articulation (P₃) et le quatrième point d'articulation (P₄) sont distants l'un de l'autre.

9. Mécanisme à genouillère pour une unité de fermeture selon l'une des revendications précédentes, **caractérisé en ce que** le ou les entraînement(s) électrique(s) et le ou les entraînement(s) hydraulique(s) s'engrènent de manière excentrée sur la tête de piston (5) et les axes des entraînements (10, 10', 11, 11') sont disposés symétriques l'un à l'autre sur l'axe longitudinal de machine (A).

10. Mécanisme à genouillère pour une unité de fermeture selon l'une des revendications 1 à 8, **caractérisé en ce qu'**un entraînement électrique (10, 10') s'engrène de manière centrée sur la tête de piston (5) et deux ou plusieurs entraînement(s) hydraulique(s) (11, 11') s'engrènent de manière excentrée sur la tête de piston (5), dans lequel les axes des entraînements hydrauliques (11, 11') sont disposés symétriques l'un à l'autre sur l'axe longitudinal de machine (A) ou qu'un entraînement hydraulique (11, 11') s'engrène de manière centrée sur la tête de piston (5) et deux ou plusieurs entraînement(s) électrique(s) (10, 10') s'engrènent de manière excentrée sur la tête de piston (5), dans lequel les axes des entraînements électriques (10, 10') sont disposés symétriques l'un à l'autre sur l'axe longitudinal de machine (A).

11. Mécanisme à genouillère pour une unité de fermeture selon l'une des revendications précédentes, **caractérisé en ce que** le ou les entraînement(s) hydraulique(s) d'une part et le ou les entraînement(s) électrique(s) d'autre part peuvent être branchés en étant actifs ou inactifs indépendamment l'un de l'autre, de telle sorte que la tête de piston (5) peut être entraînée exclusivement hydrauliquement ou exclusivement électriquement ou hydrauliquement et électriquement de manière combinée.
